# EUROPEAN PATENT SPECIFICATION

(11) **EP 0 610 993 B1**
(45) Date of publication and mention of the grant of the patent: **22.05.1996**
(21) Application number: 94200237.9
(22) Date of filing: 08.02.1994
(51) Int. Cl.: A01K 1/01

(54) **Apparatus for receiving excrements and urine of domestic cats**
Vorrichtung zur Aufnahme von Katzenexkrementen und -urin
Dispositif pour recueillir les excréments et l'urine de chats domestiques

(30) Priority: 09.02.1993 NL 9300249
(43) Date of publication of application: 17.08.1994
(73) Proprietor: Van den Bos, Ferdinand Joost, NL-1053 WH Amsterdam (NL)
(72) Inventor: Van den Bos, Ferdinand Joost, NL-1053 WH Amsterdam (NL)
(74) Representative: Metman, Karel Johannes

(56) References cited:
- US-A- 4 522 150
- US-A- 4 846 104

## Description

The present invention relates to a device for receiving excrements and urine of domestic cats, comprising a housing including a tray having a cover and a lateral passage opening.

Such device, in practice known as litter box, is known in several embodiments and is also used without cover. The tray is filled with litter, mostly in the form of grit, on which the cat may defecate. The closed embodiment of the device having a cover and only a passage opening has the advantage that it reduces the risk of litter being thrown out by the cat.

Regarding to litter used in the device it is noted that two main types of marketed litter may be distinguished. A first type of litter more or less absorbs the excrements and liquid. After a short while, the complete filling of the tray should be replaced as a result of a bad smell and as a result of the fact that the cat does not use a dirty litter box. A second type of litter encloses the excrements and urine by its grit which causes the formation of clumps. The clumps are virtually dry on the outer side and do not adhere to the unused litter. This enables a separation of the clumps from the other grit so that the clean litter can remain in the tray for further use and should only be replenished. For separating the clumps from the remainder of the litter, only a scoop or the like is available now with which the clumps may be scooped out of the box, if necessary after removal of the cover.

From US-A-4,522,150 a cat litter disposal housing is known having accommodating means for removably accommodating a screen, whereby the housing is adapted to be turned over. The screen is used to collect agglomerated litter and excrements from a cat which are priorly disposed on the litter residing on the housing's floor. Through rotation of the housing the agglomerated litter and excrements are collected on the screen for subsequent removal. However, in the housing according to US 4,522,150 there is a risk that agglomerated litter and possibly excrements by-pass the screen during rotation.

The object of the invention is to overcome this problem and to provide a device which enables an easy separation of the formed clumps from the remainder of the litter.

To obtain this object, the invention provides a device wherein the housing's cover itself is also constructed as a tray enabling the use of the housing upside down, and that the screen, in its operative position, separates the spaces within the tray and cover below and above it.

In the device according to the invention it is not possible that unscreened litter arrives in the cover which is subsequently to be used as tray.

In this device according to the invention, the separation of the clumps from the remainder of the litter is as follows. After the cat has used the device (several times), the housing may be turned upside down causing the litter contained in the tray to fall onto the screen due to the gravity. The screen has such structure that the turning movement causes the litter not adhered to a clump to fall through the screen into the cover, but the clumps being retained on the screen. The screen together with the clumps lying on it may then be removed from the housing and the clumps which do not adhere may then be easily deposited into the waste container. When the clean screen is mounted again into the housing and the litter being replenished if necessary, the device is ready again for further use.

It is conceivable that the housing is turned again after the screening operation and is used in the same position as before, but according to the invention it is preferred to construct the cover itself also as tray and to form the accommodating means such that the screen may also be supported adjacent to the tray. In this manner, the device may be used again directly after screening the litter by turning the housing upside down without the necessity of turning the housing again. Advantageously, the housing is symmetrically with respect to a horizontal central plane, so that tray and cover are equal.

To facilitate the turning movement of the housing in order to screen, the invention proposes to support the housing pivotable about a substantially horizontal axis, wherein the housing is preferably pivotally arranged on a base.

According to a preferred embodiment, the accommodating means for the screen consist of parallel horizontal slots in opposite lateral walls of the housing in which lateral edges of the screen fit. In this manner, the screen is suspended within the housing by simple means. In a device which may be used in two positions, two pairs of slots may be arranged for accommodating the screen in different positions, or the pair of slots being arranged in the plane of symmetry of the housing enabling the screen having upright parts to be mounted into the slots in reversed positions.

It is an advantage if the passage opening of the housing is arranged in a removable front panel locking the screen in the operative position, the screen preferably being attached to the front panel.

The front panel serves to lock the screen on the one hand and provides a wide entrance to the box, for example to replenish the litter, on the other hand. The passage opening for the cat may then be kept small and also a horizontal division of the housing is not necessary in this case so that the housing may be made as an integral part. The embodiment having the screen fixed to the front panel has the advantage that the front panel and the screen may be taken out from the housing in one operation which enhances the operational comfort.

In order to prevent the cat from fouling the side walls of the housing, the invention proposes to arrange within the housing along the side walls a, preferably rod-shaped, spacer for keeping the cat away from the side walls.

The invention will hereafter be elucidated with reference to the drawing showing an exemplary embodiment of the device according to the invention, which will further be reverted to as litter box.

Fig. 1 is a front view of the litter box without screen and front panel.

Fig. 2 is a sectional view of the litter box along the line II-II in Fig. 1, however, with screen plate and front panel.

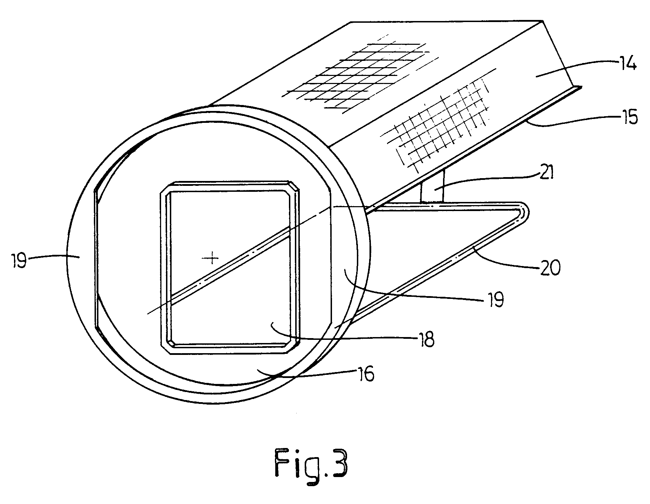

Fig. 3 is a perspective view of the front panel having screen and spacer of the litter box of Fig. 2.

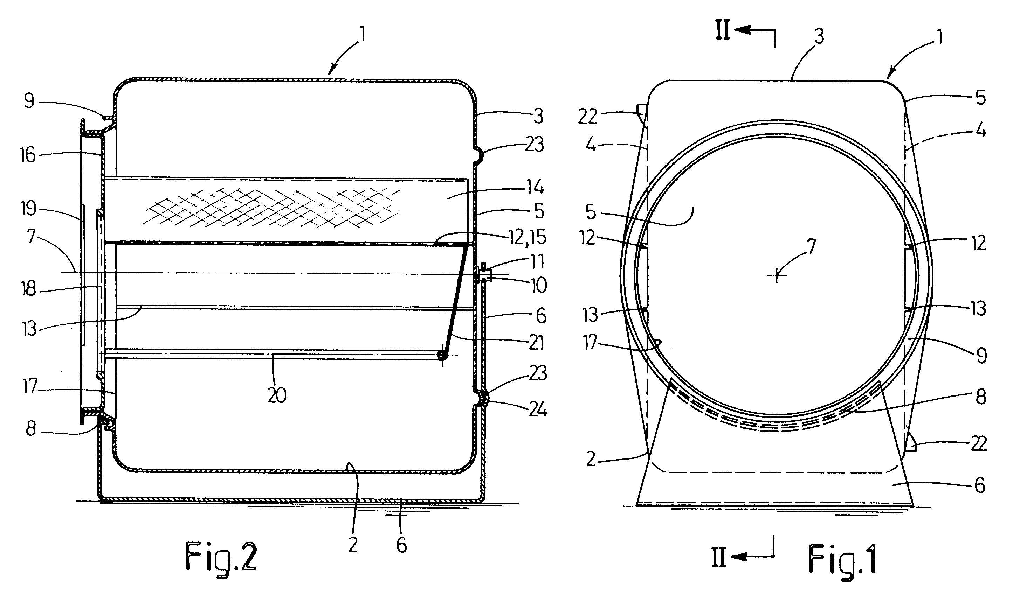

The litter box as shown in the drawing comprises a housing generally indicated by reference numeral 1 and including a lower part 2 serving as tray for accommodating litter and an upper part 3 serving as cover together with the side walls 4 and the rear wall 5. As shown in Fig. 1, the housing 1 is symmetrical relative to a horizontal plane and is integrally made from plastic, although it would also be conceivable to provide for a horizontal division.

The housing 1 is supported by a base 6 such that the housing 1 is rotatable about a central axis 7 within said horizontal plane of symmetry. On behalf of this rotatable support, the base 6 includes a guide 8 shaped as a segment of a circle and allowing a circular edge 9 on the front side of the housing 1 to rotate therein. At the rear wall 5 the housing 1 includes a journal 10 which is journaled in a hole 11 in the base. Both the journal 10 and the circular edge 9 have their centre lying on the axis 7, so that they permit a rotation of the housing 1 about the axis 7.

In the opposite side walls 4 there are formed two pairs of opposite slots 12 and 13 within two horizontal planes, said slots serving as accommodating means for accommodating a screen 14 having opposite horizontal edges 15 fitting into said pairs of slots 12 and 13. One end of the screen 14 is fixed to a perpendicularly arranged vertical panel 16 adapted to serve as front panel of the housing 1 and for this purpose being positionable within a wide circular opening 17 on the front side of the housing 1. The front panel 16 comprises a passage opening 18 through which a cat may enter and leave the housing 1. The front panel 16 further includes lateral handgrips 19 to easily remove and replace the front panel 16.

The litter box further comprises a spacer 20 serving to keep a cat within the box 2 away from the side and rear walls 4, 5 of the housing 1 so that these walls will not be fouled by excrements or urine of the cat. The spacer 20 consists in this exemplary embodiment of a bent rod extending at a small distance from the side walls 4 and rear wall 5 and being fixed both to the front panel 16 and, through a support 21, to the screen 14. In this manner, the screen 14, the front panel 16 and the spacer 20 form a unit. Of course, it is also possible to delete the spacer 20.

Fig. 1 further shows that near the upper and lower sides of the housing 1 there is formed a handgrip 22 to facilitate rotating the housing 1 about the axis 7. To lock the housing 1 in a stable manner in the operative position as shown in Fig. 1 and 2, there is provided locking means, in this case consisting of two spherical projections 23 offset 180° about the axis 7 and each adapted to cooperate with a cavity 24 in the base 6 in a corresponding position of the housing 1. The resiliency of the catching or locking mechanism formed by the projections 23 and the cavity 24 is delivered by the resiliency of the rear wall 5 of the housing 1 and/or that of the base 6. Of course it is also possible that the friction between the guide 8 and the edge 9, or between the journal 10 and the hole 11, respectively, is sufficient to stabilize the housing 1 in the operative position, and it is also conceivable to provide a magnetic lock.

The use of the exemplary embodiment of the cat litter box according to the invention as illustrated in the drawing is as follows.

In use, the housing 1 of the litter box is in the position of Fig. 1 and 2 in which the front panel 16 is positioned such that the screen 14 extends above the passage opening 18 and the edges 15 of the screen 14 are inserted into the slots 12. The tray 2 is filled with litter, for example up to the lowest point of the opening 17 in the housing 1, and the cat is allowed to defecate on it. The litter within the tray 2 is of such type that the grit which is in contact with the urine and/or excrements forms a clump which is dry on the outer side. In order to separate these clumps from the remaining litter, the housing 1 is turned on the base 6 about the central axis 7 by means of the handgrips 22 through an angle of 180°, so that the tray 2 is on the upper side and the cover 3 is on the lower side. During this reversal of the housing 1, the litter is dropped on the screen 14 and this screen 14 is of such structure that the loose litter falls through it into the cover 3 and only the clump or clumps remain thereon. As the screen 14 extends through the whole horizontal area of the housing 1 and therefore fully separates the spaces within the tray 2 and cover 3, it is not possible for clumps to fall past the screen. After this reversal of the housing 1, the front panel 16 may be pulled out of the opening 17 by the handgrips 19, the screen 14 which is on the lower side of the front panel 16 coming along so that the screen may be removed from the housing 1 in only one operation whereafter the clumps lying thereon may be deposited into the waste container. Also the spacer 20 follows the front panel 16 and screen 14 with the outside movement. Since the housing 1 is symmetrically with respect to a central plane, it is not necessary to rotate the housing 1 once again about the axis 7, but the housing 1 in its reversed position after screening is immediately available again, wherein the tray 2 serves as cover and the cover 3, in which the clean litter is dropped, as tray. The front panel 16 is then returned into the opening 17, during which the edges 15 of the screen 14 are inserted into the slots which are then on the upper side. The litter box is then ready for use again.

From the foregoing it will be obvious that the invention provides a litter box which is very convenient to use in respect of the separation of clumps from litter.

It is for example possible that the slots 12 and 13 may be open to a large extent on the non-supporting side thereby preventing any jamming of the edges 15 of the screen 14 within the slots 12 and 13. The slots may of course also be reduced to lower and upper abutments.

It is also possible to introduce the screen into the housing only if the housing should be turned upside down to screen the litter. In this case it is not necessary that the screen is positioned above the passage opening in order to allow the cat to enter. The accommodating means for the screen in this embodiment may also be arranged in the horizontal central plane of the housing (for example one pair of slots), such that the screen may be accommodated in two positions turned 180° about a horizontal axis. In this embodiment, the housing may have a smaller height because no space is lost by the arrangement of the screen. Apart from screening, the screen may for example be accommodated in a room between the lower side of the housing and the base, which room is necessary to permit rotation of the housing. In that case, the housing may for example be rotated only if the screen is removed from the room.

## Claims

1. Device for receiving excrements and urine of domestic cats, comprising a housing (1) including a tray (2) having a cover (3) and a lateral passage opening (18); the housing (1) including accommodating means (12, 13) for removably accommodating a screen (14), said housing (1) being adapted to be turned over, **characterized** in that the cover (3) itself is also constructed as a tray to use the housing upside down and in that the screen, in its operative position, separates the spaces within the tray (2) and cover (3) below and above it.

2. Device according to claim 1, wherein the accommodating means (12, 13) are formed such that the screen (14) may be supported adjacent both the tray (2) and the cover (3).

3. Device according to claim 1 or 2, wherein the housing (1) is symmetrical with respect to a horizontal central plane.

4. Device according to one of the preceding claims, wherein the housing (1) is supported pivotable around a substantially horizontal axis (6).

5. Device according to claim 4, wherein the housing (1) is pivotally arranged on a base (6).

6. Device according to claim 5, wherein the housing (1), in its operative position, is retained from rotation relative to the base (6) by locking means (23, 24).

7. Device according to one of the preceding claims, wherein the accommodating means include parallel horizontal slots (12, 13) in opposite side walls (4) of the housing (1) in which lateral edges (15) of the screen (14) fit.

8. Device according to one of the preceding claims, wherein the passage opening (18) of the housing (1) is arranged in a removable front panel (16) locking the screen (14) in the operative position.

9. Device according to one of the preceding claims, wherein a, preferably rod-shaped, spacer (20) for keeping the cat away from the side walls (4) extends along said side walls (4) within the housing (1).

10. Device according to claim 8 or 9, wherein the front panel (16), the screen (14) and possibly the spacer (20) are assembled into a unit.

## Patentansprüche

1. Vorrichtung zum Aufnehmen von Exkrementen und Urin von Hauskatzen mit einem Gehäuse (1) mit einer Schale (2) mit einer Abdeckung (3) und einer seitlichen Durchgangsöffnung (18); wobei das Gehäuse (1) Aufnahmemittel (12, 13) zur abnehmbaren Aufnahme eines Siebs (14) aufweist, wobei das Gehäuse (1) zum Umdrehen ausgerichtet ist, dadurch **gekennzeichnet**, daß die Abdeckung (3) als solche ebenso als Schale ausgeführt ist, um das Gehäuse in umgedrehtem Zustand zu verwenden, und daß das Sieb in seiner Betriebsposition die Räume innerhalb der Schale (2) und der Abdeckung (3), die sich unterhalb und überhalb davon befinden, abtrennt.

2. Vorrichtung gemäß Anspruch 1, bei der die Aufnahmemittel (12, 13) so ausgebildet sind, daß das Sieb (14) sowohl benachbart zu der Schale (2) als auch zu der Abdeckung (3) tragbar ist.

3. Vorrichtung gemäß Anspruch 1 oder 2, bei der das Gehäuse (1) bezüglich einer horizontalen zentralen Ebene symmetrisch ist.

4. Vorrichtung gemäß einem der vorhergehenden Ansprüche, bei der das Gehäuse (1) schwenkbar um eine im wesentlichen horizontale Achse (6) getragen ist.

5. Vorrichtung gemäß Anspruch 4, bei der das Gehäuse (1) schwenkbar an einer Basis (6) angeordnet ist.

6. Vorrichtung gemäß Anspruch 5, bei der das Gehäuse (1) in seiner Betriebsposition durch Feststellmittel (23, 24) an einer Drehung relativ zur Basis (6) gehindert ist.

7. Vorrichtung gemäß einem der vorhergehenden Ansprüche, bei der die Aufnahmemittel parallele horizontale Schlitze (12, 13) in gegenüberliegenden Seitenwänden (4) des Gehäuses (1) aufweisen, in die Seitenkanten (15) des Siebs (14) passen.

8. Vorrichtung gemäß einem der vorhergehenden Ansprüche, bei der die Durchgangsöffnung (18) des Gehäuses (1) in einer abnehmbaren Vorderplatte (16) angeordnet ist, welche das Sieb (14) in Betriebsposition feststellt.

9. Vorrichtung gemäß einem der vorhergehenden Ansprüche, bei der ein vorzugsweise stabförmiges Abstandsmittel (20), welches dazu dient, die Katze von den Seitenwänden (4) fernzuhalten, entlang den Seitenwänden (4) innerhalb des Gehäuses (1) verläuft.

10. Vorrichtung gemäß Anspruch 8 oder 9, bei der die Vorderplatte (16), das Sieb (14) und möglicherweise das Abstandsmittel (20) in einer Einheit ausgebildet sind.

## Revendications

1. Dispositif pour recevoir des excréments et de l'urine de chats domestiques, ce dispositif comportant un boîtier (1) comprenant un compartiment (2) avant un couvercle (3) et une ouverture de passage latéral (18); le boîtier (1) comportant des moyens de montage (12, 13) pour monter de façon amovible une grille (14), ledit boîtier (1) étant agencé pour être retournée, **caractérisé** en ce que le couvercle (3) est également construit comme un compartiment afin de permettre l'utilisation du boîtier à l'état retourné, et en ce que la grille, dans sa position opérationnelle, sépare les espaces intérieurs du compartiment (2) et du couvercle (3) respectivement en-dessous et au-dessus d'elle.

2. Dispositif selon la revendication 1, dans lequel les moyens de montage (12, 13) sont conçus de telle manière que la grille (14) puisse être placée à proximité du compartiment (2) et du couvercle (3).

3. Dispositif selon la revendication 1 ou 2, dans lequel le boîtier (1) est symétrique par rapport à un plan horizontal.

4. Dispositif selon l'une quelconque des revendications précédentes, dans lequel le boîtier (1) est monté de manière pivotante autour d'un axe (6) sensiblement horizontal.

5. Dispositif selon la revendication 4, dans lequel le boîtier (1) est pivotante par rapport à une base (6).

6. Dispositif selon la revendication 5, dans lequel le boîtier (1) est, dans sa position opérationnelle, empêché de tourner par rapport à la base (6) par des moyens de verrouillage (23, 24).

7. Dispositif selon l'une quelconque des revendications précédentes, dans lequel les moyens de montage comprennent des rainures (12, 13) horizontales parallèles ménagées dans des parois opposées (4) du boîtier (1), des bords latéraux (15) de la grille étant engagés dans ces rainures.

8. Dispositif selon l'une quelconque des revendications précédentes, dans lequel l'ouverture de passage (18) du boîtier (1) est ménagée dans un panneau frontal amovible (16) qui bloque la grille (14) dans sa position opérationnelle.

9. Dispositif selon l'une quelconque des revendications précédentes, dans lequel un espaceur (20), de préférence réalisé au moyen d'une tige, destiné à tenir le chat éloigné des parois latérales (4) s'étend le long desdites parois (4) à l'intérieur du boîtier (1).

10. Dispositif selon la revendication 8 ou 9, dans lequel le panneau frontal (16), la grille (14) et de préférence l'espaceur (20) sont montés d'une pièce.
